# EUROPEAN PATENT APPLICATION

(11) **EP 2 743 832 A1**
(43) Date of publication of application: **18.06.2014**
(21) Application number: 12461562.6
(22) Date of filing: 13.12.2012
(51) Int. Cl.: G06F 11/36

(54) **Method and apparatus for testing the rendering quality**

(71) Applicant: Samsung Electronics Polska Spolka z organiczona odpowiedzialnoscia, 02-674 Warszawa (PL)
(72) Inventor: Rokita, Przemyslaw, 00-665 Warszawa (PL); Myrcha, Julian, 00-665 Warszawa (PL); Piotrowski, Jacek, 00-665 Warszawa (PL); Gajda, Marcin, 00-633 Warszawa (PL); Slachciak, Lukasz, 00-633 Warszawa (PL)

(57) **Abstract**

One or more hints are used for adjusting the test image and the reference image prior to image comparison, in order to accurately assess the visual difference between the expected rendering outcome and the actually rendered image. Reference hints are specified manually or they are found automatically, basing on the variance of pixel colour. A removal of margins and text regions improves the outcome of the method according to the present invention.

## Description

The present invention relates to the method and system for testing, and more particularly to a technique for testing the quality of rendering. The present invention is applicable for testing web pages, web applications, graphical user interfaces, rendering engines and similar solutions.

### State of art

Testing of systems and methods for image generation is necessary during the development and quality control of hardware and software imaging solutions.

For example, a web browser may be seen as an interpreter of a code written in the HTML language. This HTML code describes the structure and content of a hypertext document to be presented to the user in a graphical form. The main module of a common web browser is the rendering engine. It is responsible for translating the source HTML into its graphical representation. The rendering engine is usually strongly coupled with other modules of a web browser, including the script engine.

Different web browsers or the same web browser run on different platforms may generate different representations of the same HTML document. Therefore, advanced web applications require testing on many web browsers and platforms to ensure, that the user will see a properly rendered image despite of the utilized web browser and platform.

The testing of the web browser itself is one embodiment of the present invention. The testing of web applications executed either by the web server or by the browser directly is another embodiment of the present invention.

The plurality of contemporary devices communicate with the user by means of a graphical user interface (GUI). Implementation of such GUI is particularly hard and error prone. GUI designers are usually skilled in art but not necessary in software engineering. Therefore, designs of GUI are often delivered in a graphical form, as digital images presenting the layout of particular screens with a small description about the purpose of each graphical component. These GUI designs are transformed by software engineers into a code which, during execution, results with the designed GUI elements rendered on a screen.

The customers and stakeholders validate the implementation of the design mainly by a visual comparison of the rendered layout with the primary GUI design. GUI testing is also performed at intermediate levels of developement to assure, that already finished components have not been damaged accidentially during work.

Another aspect of software development is release control. A progress achieved in subsequent releases can be easily assessed with the present invention.

A system supporting for GUI developement is yet another embodiment of the present invention.

There are known methods for testing web browsers, web applications and graphical user interfaces, acting on a principle similar to the one described here, that is, by comparison of the rendered image of the screen with the reference image. These methods perform image comparison at the pixel level, which results in a poor outcome in case where the distortion of the test image relative to the reference image is natural and desired.

### Description

The verification of the rendering quality according to the present invention is free from this drawback due to taking into account some features of the analyzed image class, which are utilized by the method steps described in detail further.

The method for testing the rendering quality according to the present invention comprises comparing and measuring the visual difference between two images, which are screen snapshots (e.g. from pages rendered by web browsers). This method can be incorporated as a part of a semi- or full-automatic testing system for verifying the development progress of the rendering engine (e.g. of a web browser). The rendered images are expected to have similar structure. In the ideal case they should be exactly the same.

To compute the visible differences between the rendered images, the visible differences predictor (VDP) algorithm is utilized. The VDP algorithm is described in detail in Daly, Scott: "The Visible Differences Predictor: An Algorithm for the Assesment of Image Fidelity", in Digital images and human vision (A. B. Watson, ed.), pp.179-206, MIT Press, 1993*.* The VDP algorithm is a technique allowing to decide, with a given probability, if changes in the image are visible to the observer.

There are three main problems with the VDP algorithm, which are overcame by the method according to the present invention:

The first problem lays in the way, how the VDP handles images, which structure was slightly altered (e.g. parts were moved by several pixels). This causes false difference notifications, even if the human observer might hardly notice real difference. This is severe problem, because web pages are created using incremental positioning - a change in size of even small element at the beginning of the page results in shifting of the entire content. Thus, even similarly looking pages may be misaligned during comparison.

The second problem lays in the way, how texts are handled during creation of the rendered image. Even small differences in font definitions (or lack of a specific font which results in font substitution) gives changes within entire text area. Such changes may (or may not) be hardly visible, because human eye is trained to understand the text (the brain concentrates on the meaning, not on the pattern), which leads to ignoring small changes in the text area.

The third problem lays in the fact, that the VDP is computationally intensive and a testing tool which uses this algorithm might be inconvenient for daily regression testing.

A feature of images compared in tests under consideration is the ocurrence of corresponding parts, which one can identify and determine their mutual position in the image. Moreover, at least a subset of the identified features can be matched between the reference image and the test image. These characteristic features are further referred as hints.

Thus, a transformation is feasible to map the test image onto the reference image, which transformation preserves semantic properties of corresponding regions regarding to their spatial layout.

The text regions in the image can be detected and removed from the image prior to the comparison.

Instead of computing the VDP, a simpler (but to some degree comparable) method was proposed for fast checking of the differences between images. Despite the percentage assessment is not available in this approach, this much faster solution also generates a difference map, which is an advice, where the errors are located.

A feature of the present invention comprises the method steps of: getting the reference image together with one or more reference hints; and, for one or more test images, geting the test image; and processing the test image in image processing operation; in order to facilitate efficient image comparison in the last method step. The image processing operation according to the present invention comprises the method steps of: computing one or more hints for the test image, said hints corresponding to the reference hints; and, optionally, removing boundary parts of the image, like margins; and, basing on the hints, adjusting the test image to the reference image; and, optionally, detecting and removing text regions.

### Figures

The details of the present invention will be explained, by way of example only, with reference to the preferred embodiment thereof, as illustrated in the attached drawings, in which:
Figure 1 depicts the architecture of an apparatus for testing the rendering quality according to one embodiment of the present invention;
Figure 2 depicts the architecture of an apparatus for testing the average rendering quality according to another embodiment of the present invention;
Figure 3 is a flow chart showing the operational steps involved in the overall process to test the rendering quality;
Figure 4 is a schematic drawing for explaining the step of getting the reference data;
Figure 5 is a flow chart showing the operational steps involved in determining the first hint;
Figure 6 is a schematic drawing for explaining steps involved in image segmentation;
Figure 7 is a schematic drawing for explaining steps involved in filtering segments;
Figure 8 is a schematic drawing for explaining steps involved in image processing;
Figure 9 is a schematic drawing for explaining steps involved in adjusting images and removing margins;
Figure 10 is a schematic drawing for explaining steps involved in processing text regions;
Figure 11 shows steps involved in comparing images;
Figure 12 depicts an exemplary reference image and an exemplary test image;
Figure 13 shows how the test image is adjusted to the reference image and how margins are removed;
Figure 14 shows clipped images from Figure 13;
Figure 15 shows the case where more hints are used for alignment;
Figure 16 depicts the adjustment rules;
Figure 17 shows adjusted parts;
Figures 18 and 19 show exemplary reference and test images used for testing the rendering engine of a web browser;
Figure 20 shows found visible difference between images.

### Detailed description

Hereinafter, the preferred embodiment of the present invention will be described in detail with reference to the accompanying drawings.

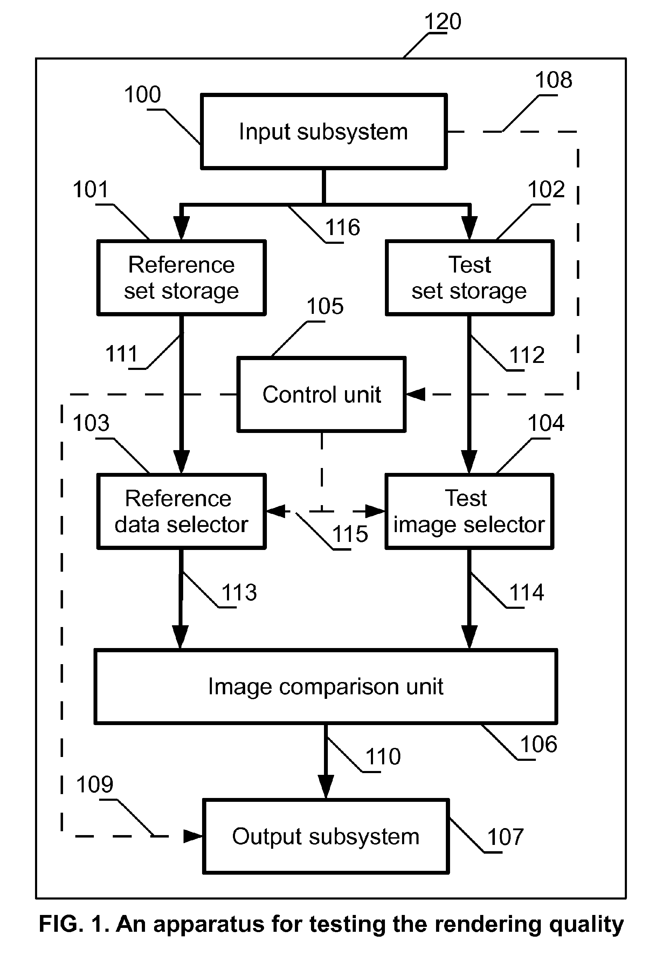

The architecture of an apparatus for testing the rendering quality 120 according to the first embodiment of the present invention is depicted in Figure 1. The apparatus for testing the rendering quality 120 comprises: the input subsystem 100 for providing input data for said apparatus, means 101 for storing the set of reference data, means 102 for storing the set of test images, the selector 103 for selecting reference data from the reference set, the selector 104 for selecting a single test image from the test set, the control unit 105 for controlling the selection process, the image comparison unit 106 for assessing the visible difference between images, and the output subsystem 107 for sharing the outcome. The apparatus for testing the rendering quality 120 further comprises: means 108 for sending control signals from the input subsystem 100 to the control unit 105, means 109 for sending control signals from the control unit 105 to the output subsystem 107, means 110 for providing the outcome from the image comparison unit 106 to the output subsystem 107, means 111 for accessing the reference set storage 101 from the reference data selector 103, means 112 for accessing the test set storage 102 from the test image selector 104, means 113 for accessing the reference data selected be the reference data selector 103 from the image comparison unit 106, means 114 for accessing the test image selected by the test image selector 104 from the image comparison unit 106, means 115 for sending control signals from the control unit 105 to the reference data selector 103 and to the test image selector 104, and means 116 for transmitting control signals and input data from the input subsystem 100 to the reference set storage 101 and to the test set storage 102. Reference data comprise reference images with accompanying reference hints. Test data comprise test images.

The image comparison unit 106 produces an outcome in the form <I_{ref}, Iₜₑₛₜ, similarity> where I_{ref} and Iₜₑₛₜ refer to the compared images: the referece image and the test image, accordingly, and *similarity* refers to the visible similarity measure. Operating modes of the image comparison unit 106 utilize the method according to the present invention and they will be described in detail further.

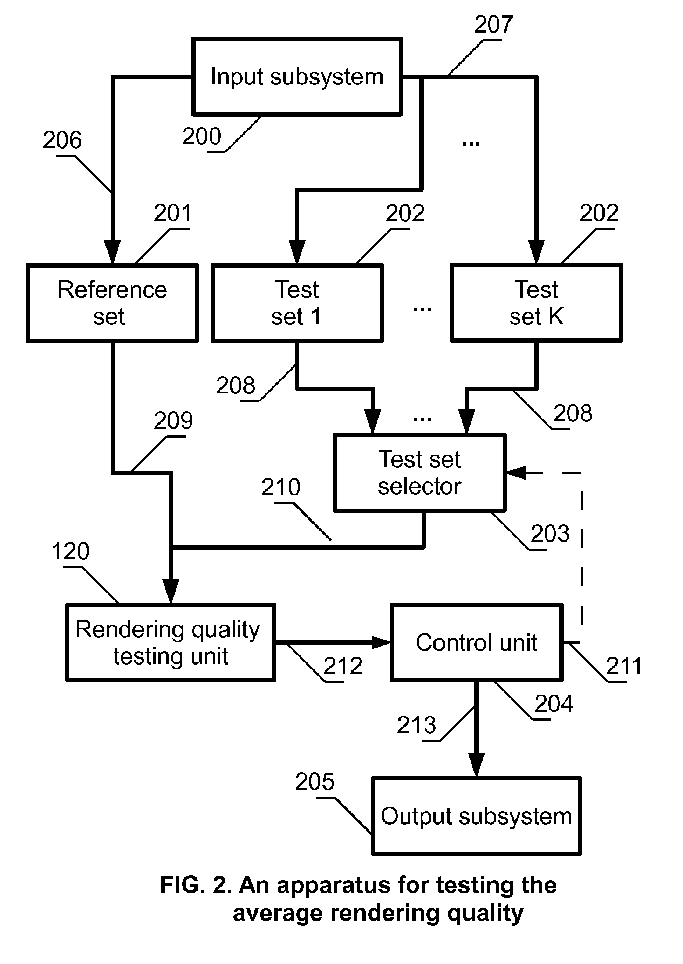

The architecture of an apparatus for testing the average rendering quality according to another embodiment of the present invention is depicted in Figure 2. The apparatus for testing the average rendering quality comprises: the rendering quality testing unit 120, the same as shown in Figure 1, extended with additional modules. Said additional modules comprise: another input subsystem 200 for providing input data, another output subsystem 205 for sharing the outcome, means 201 for storing the reference set, one or more means 202 for storing test sets, the test set selector 203 for selecting a test set from available K sets, and another control unit 204 for coordinating the selection. A variety of embodiments is possible, for example: the entire input subsystem 200 or its parts can be incorporated into the unit 120, the reference set storage 201 can be omitted, etc. Said apparatus for testing the average rendering quality further comprises: means 206 for providing reference data 201, means 207 for providing test sets, means 208 for accessing test sets, means 209 for providing the reference set to the unit 120, means 210 for providing the test set selected by the test set selector 203 to the unit 120, means 211 for sending control signals from the control unit 204 to the test set selector 203, means 212 for sending the result from the rendering quality testing unit 120 to the control unit 204, and means 213 for sharing the final outcome produced by the control unit 204 through the output subsystem 205.

The outcome produced by the control unit 204 is of the form <k, average_similarity> where *k* refers to the best test set, and *average_similarity* refers to the average visible similarity determined for the set k. A variety of operational modes is possible. For example, in one embodiment, the control unit 204 proceeds through test sets from *1* to *K,* selects the set *k* with the best avarage similarity measure for all images belonging to said set *k*, and reports the outcome for the selected set *k*. In another embodiment the control unit 204 proceeds through test sets from *1* to *k*, where the average similarity measure satisfies some predefined condition for the test set *k*, and reports the outcome for the selected set *k*.

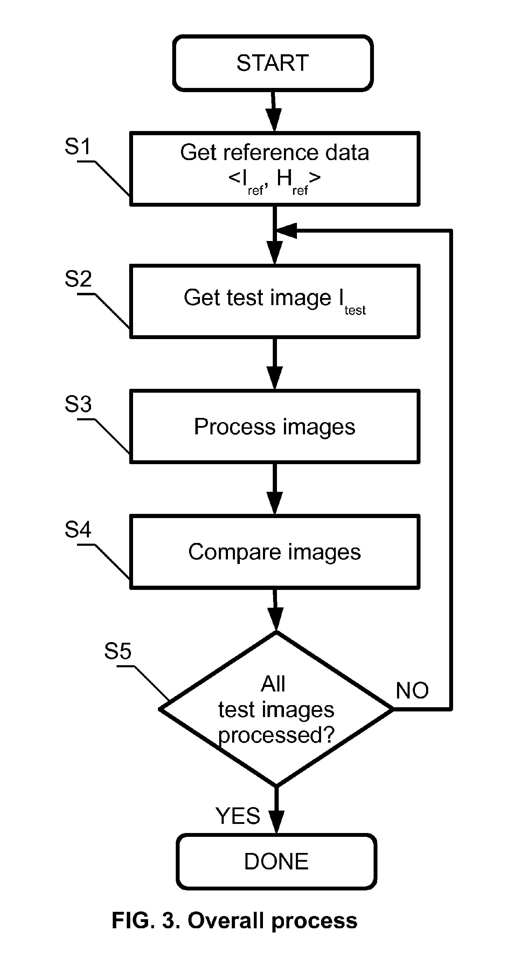

The operational steps involved in the overall process to test the rendering quality are shown in Figure 3. First, reference data is loaded in step S1. Second, a test image is loaded in step S2. Third, image processing is performed in S3, which leads to efficient image comparison in S4. If there are more test images in step S5, the steps S2 - S4 are repeated for subsequent test images.

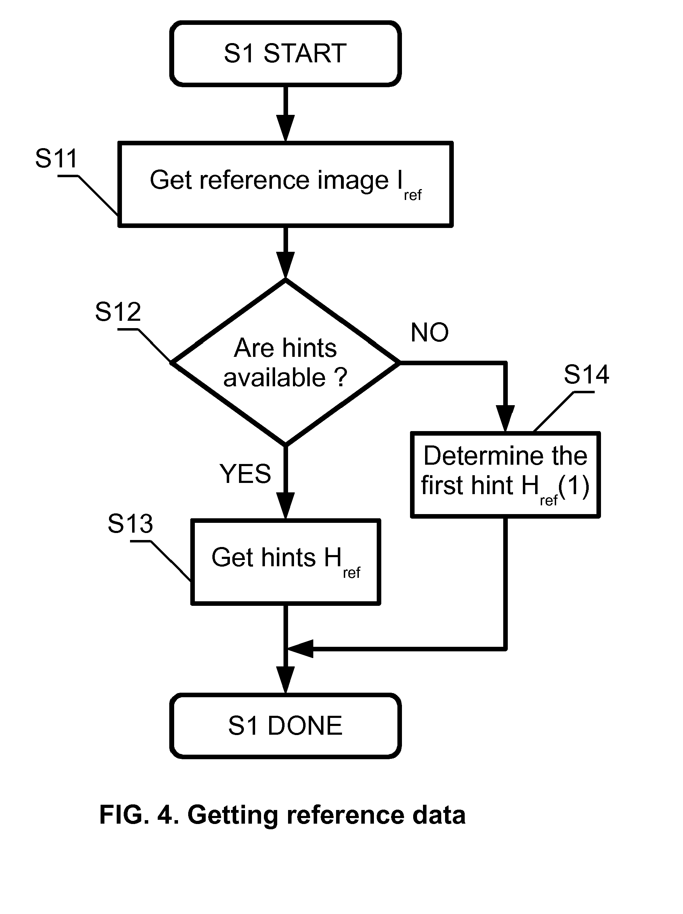

The step of getting reference data is explained in Figure 4. The reference data consists of the reference image I_{ref} loaded in step S11 and hints H_{ref} loaded in step S13. It is possible that no reference hints are available in step S12. In this case only the first reference hint H_{ref}(1) is determined in step S14.

Image alignment is necessary because each image may have different size (e.g. margins may be added or one of the images may be truncated) and their content may be misaligned due to different sizes of the image parts. Before any comparison takes place, they should be aligned properly. Alignment is done by localizing distinctive regions in both images and matching them together. The distinctive regions may be totally different for each test case and it is hard to find a single solution to find them in the image. Therefore there are two possible ways to get distinctive regions: (a) to compute them automatically using image statistics or (b) to get them from the user who points what he want in reference file. Distinctive regions will be named hints, as they help to align images.

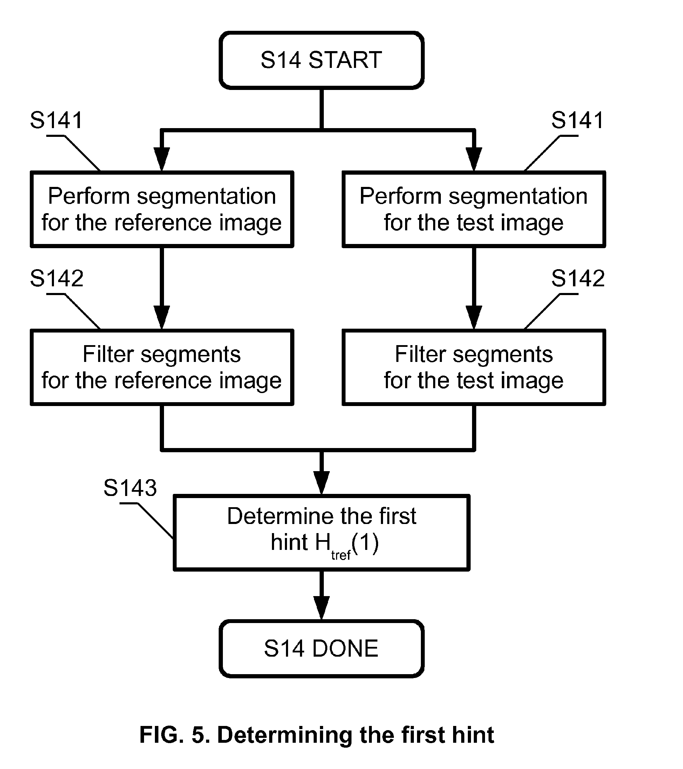

Figure 5 depicts operational steps involved in determining the first hint, in the case where no manually predefined reference hints are available. Both images, the reference image and the test images are processed to automatically determine the first hint. Image segmentation is performed on each image in step S141, accordingly. Segments are collected, for each image separately, and filtered in step S142, accordingly. Then, in step S143, the first hint is determined, using the following criteria: (a) the first hint is available in both images, the reference image and the test image, and (b) the first hint is located in the left-top corner of the reference image.

Because a distinctive region serves for image alignment with pixel precision, regions with constant color are not adequate as hints. Therefore parts with big color variance are used as an base for segmentation. It has been experimentally verified that the best results are obtained for simple counting occurrences of the image colour in the neighbourhood and selecting only those pixels, which are frequent enough.

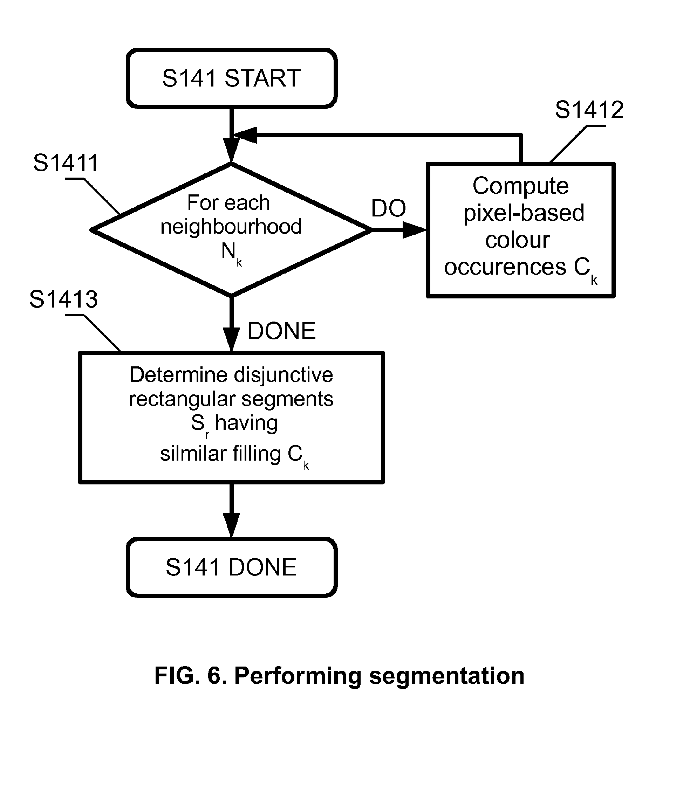

Steps involved in image segmentation are explained in Figure 6. A MxM mask is used, which masks is swept across the image, determining, in step S1411, consecutive neighbouhoods Nₖ. For each neighbouhood Nₖ pixel-based colour occurences Cₖ are computed in step S1412. Then, in step S1413, disjunctive rectangular regions are determined Sᵣ having similiar colour filling Cₖ. These regions are called image segments.

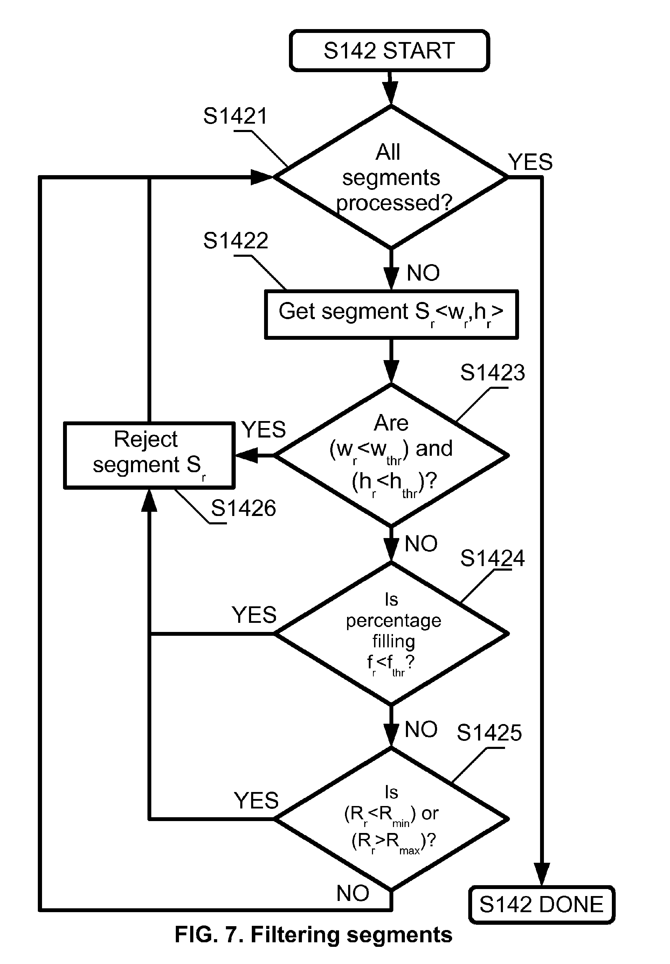

Steps involved in filtering segments are explained in Figure 7. Segment filtration is three-fold. Until all segments are processed (step S1421), for each consecutive segment Sᵣ (step S1422), three phases are performed. In the first phase, in step S1423, segment's width Wᵣ is compared to a predefined threshold value wₜₕᵣ and segment's height hᵣ is compared to a predefined threshold value hₜₕᵣ. If the analysed segment is too small, it is rejected in step S1426.

Otherwise, the second phase is performed. The percentage filling fᵣ is calculated in step S1424, which says, how many pixels in the bounding rectangle belong to the segment Sᵣ. If this coefficient is less than a pretermined threshold value fₜₕᵣ, the segment is rejected in step S1426.

Otherwise, the third phase is performed. A ratio is computed in step S1425, basing on segment's width wᵣ and on segment's height hᵣ, which ratio is defined as Rᵣ = wᵣ/ hᵣ. The calculated ratio Rᵣ is compared to predefined threshold values Rₘᵢₙ and Rₘₐₓ. If the analysed segment has proportions out of these bondaries, it is rejected in step S1426.

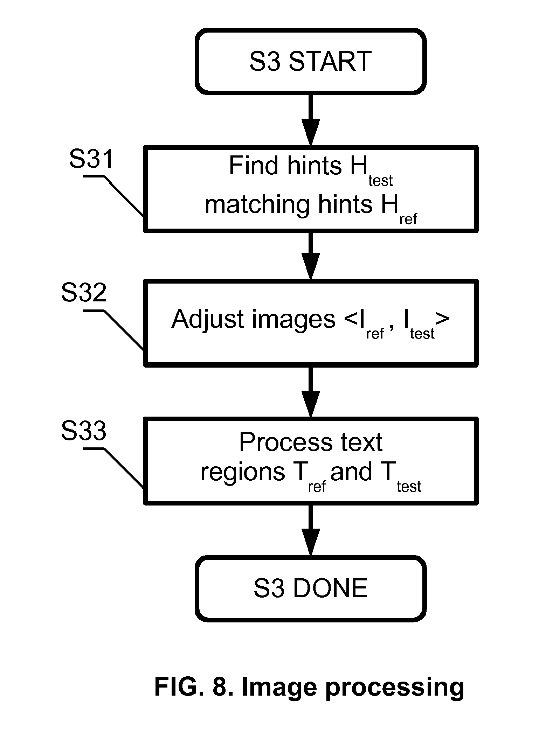

The operational steps involved in the image processing are shown in Figure 8. Image processing is repeated for each test image Iₜₑₛₜ loaded in step S2. First, hints Hₜₑₛₜ have to be found in step S31, that match corresponding reference hints H_{ref}. Second, in step S32, the test mage Iₜₑₛₜ is adjusted to the reference image I_{ref} in terms of correspondence of hints. Finally, text regions are processed in step S33.

To find test hints in step S31, one can use the same approach as depicted in Figures 5-7, except that one or more reference hints are already known at this stage.

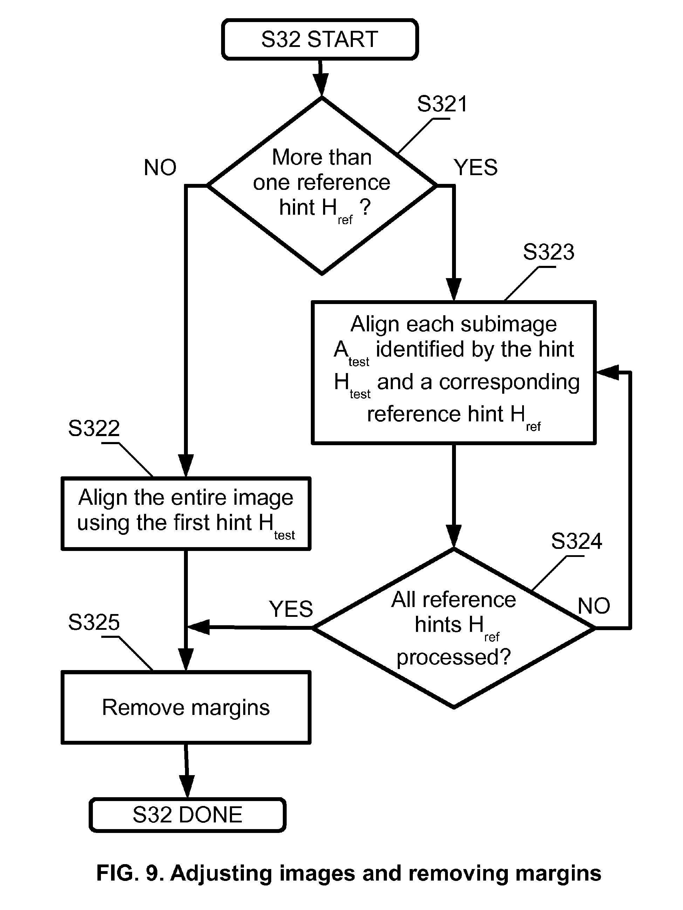

Steps involved in adjusting images are illustrated in Figure 9. Two modes of operation are possible (step S321). In the first operational mode, only one reference hint H_{ref} is available. In this case a corresponding hint Hₜₑₛₜ has to be determined in the tested image. It is done in step S322, where the first hint is utilized to align the entire test image. In the second operational mode, more than one reference hint H_{ref} is available. In this case, in step S323, each subimage Aₜₑₛₜ, identified by the hint Hₜₑₛₜ is aligned to its corresponding reference hint H_{ref}. Step S323 is repeated until, in step S324, all reference hints H_{ref} are processed. Finally, in step S325, margins are removed.

Using a single hint only produces worse results than using many hints, because manually created hints have that advantage, that they are properly organized. It is a form of introduction of expert knowledge into an automaton.

The hint file contains a list of rectangles. Each rectangle points to the specific area in the reference image, which may be used to adjust the position of the corresponding part of the test image. If the test image does not contain any of the rectangles (for instance when the test image is incorrect) then respective hints are not taken into account. If there is at least one correct matching between the test image and the reference image, this mapping is used to adjust the position of the test image. If more mapping were found, they are used to adjust particular parts of the test image, thus shifts will be compensated and they will not generate false errors.

After the alignment of the images, there is still problem with text segment content. Even similar looking pages may differ visually due to different text rendering. To solve that problem, there is a possibility to remove texts from both (reference and test) images , which gives the possibility to compare images without texts. Here, two algorithms can be used for text removal: (a) fast, based on statistical measures of the text segments and (b) slower, based on recognition of the letters using neural network. First solution is fast and quite reliable. It allows us to process new tests without spending time to teach neural network. The second solution gives better control of the recognition process, but it requires much more time to prepare tests.

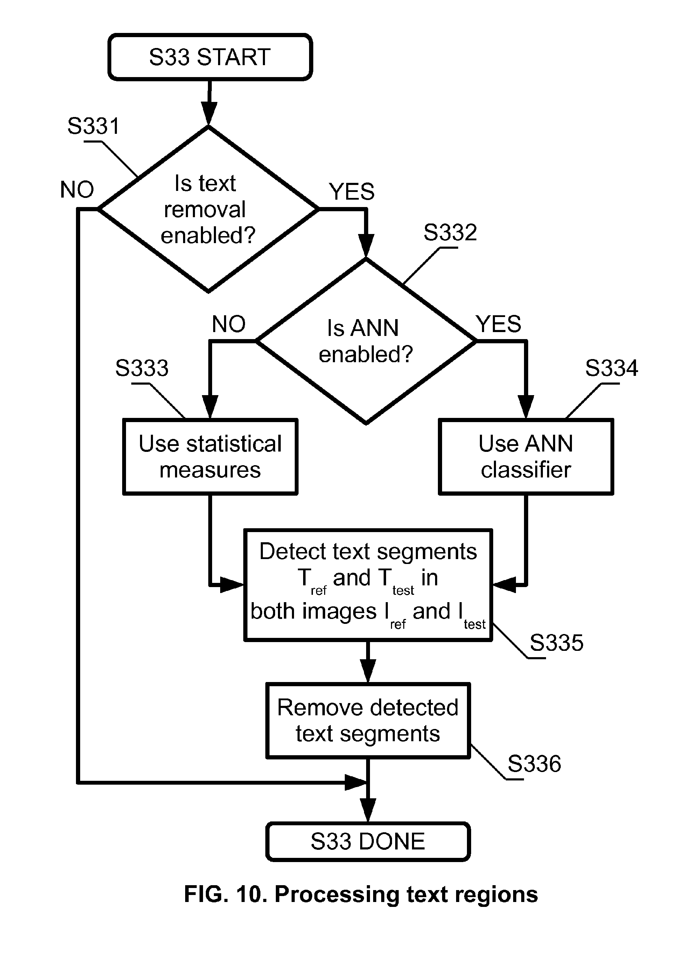

Steps involved in processing text regions are explained in Figure 10. The text processing means here a removal of text regions. If the text removal feature is enabled, in step S331, two ways of processing are possible in step S332. If an artificial neural network (ANN) is disabled, statistical measures are selected to detect text regions in step S333. If the ANN is enabled, the ANN classifier is selected to detect text regions in step S334. In step S335 the selected method is used to detect text segments T_{ref} and Tₜₑₛₜ in both images I_{ref} and Iₜₑₛₜ, accordingly. Then, in step S336, detected text segments are removed.

To train the ANN a set of training data is required. Here, each segment is described by 9 values (7 moments, width and height). The purpose of the classifier is to judge whether given segment contains text, image or some other part of a web page. To achieve this, segment data (nearly 150000 items) have been stored and manual classification has been performed in order to prepare training data.Once the ANN has been trained the weights are stored and the ANN is ready to use without further training.

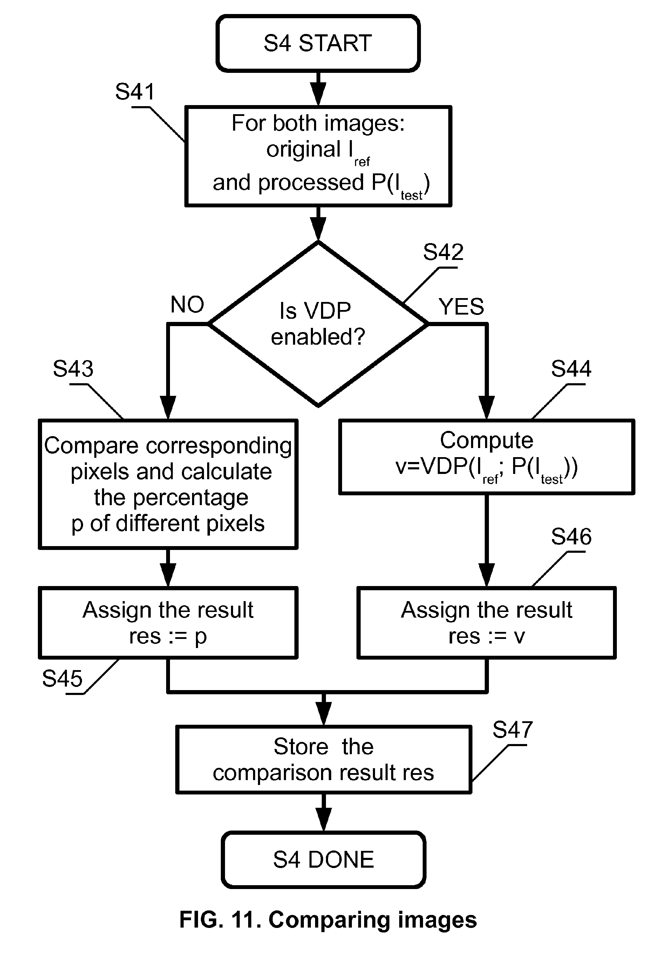

Steps involved in comparing images are explained in Figure 11. In step S41 both images are taken, the reference image I_{ref} and the test image processed in steps S1-S3 P(Iₜₑₛₜ) as input data. There are two operational modes. If the VDP algorithm is disabled in step S42, the percentage of different pixels p is calculated in step S43 and, in step S45, the percentage of different pixels p is assigned to the result.

The percentage of different pixels is calculated for each of coresponding pixels in both images, on the pixel-to-pixel basis.

If the VDP algorithm is enabled in step S42, the visual differences predictor v between the reference image I_{ref} and the processed test image P(Iₜₑₛₜ) is computed in step S44 and, in step S46, the visual differences predictor v is assigned to the result. Finally, in step S47, the result of image comparison is stored. It can further be used directly as a measure of the rendering quality.

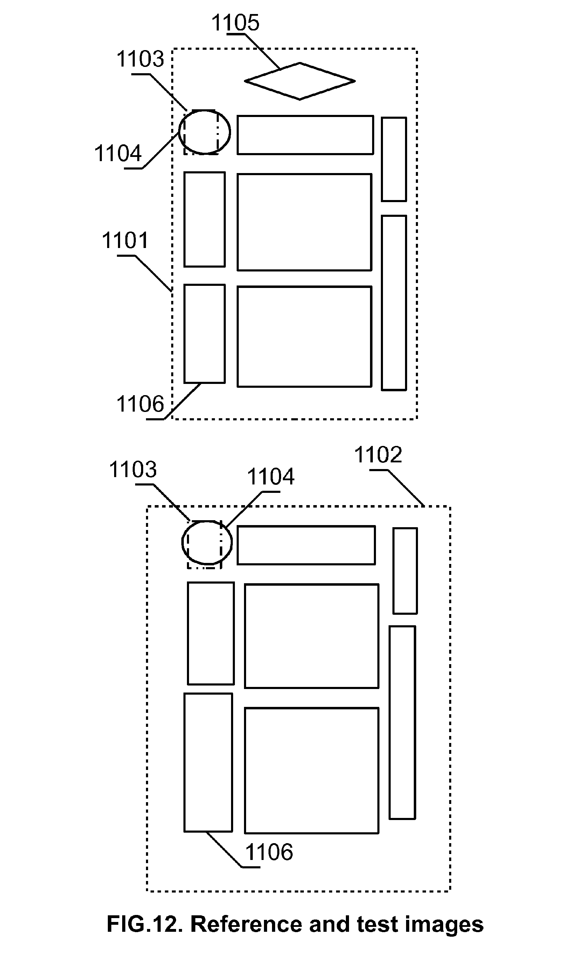

The exemplary reference image 1101 and the exemplary test image 1102 schematically depicted in Figure 12 are of different size. Most segments, like 1104 and 1106, from the test image have their counterparts in the reference images. Some segments, like 1105, do exist only in the one of images. The first common segment 1104 is used to determine the first hint 1103.

A hint is determined as a small rectangle region anchored at the upper-left corner of the segment and containing original pixels of that segment. This partial information taken from the first image can be used to find a corresponding area in the second image, and thus to find the upper-left corner of the corresponding segment in the second image.

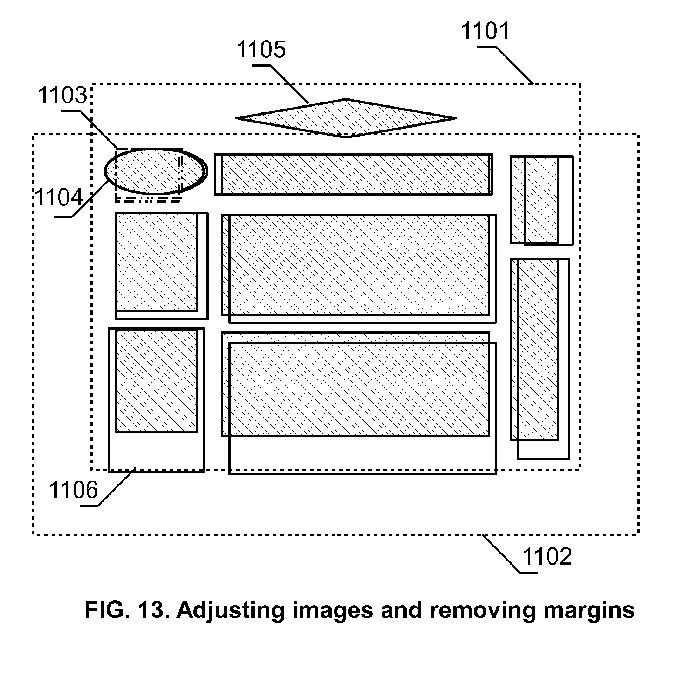

Figure 13 shows how the test image 1102 is adjusted to the reference image 1101 and how margins are removed. The first hint 1103 is used to align both images. Segments outside the intersection of adjusted images are discarded. This removes margins and marginal segments, like 1105. The first segment 1104, identified by the first hint 1103, is already adjusted. Other elements, like 1106, are not fully adjusted.

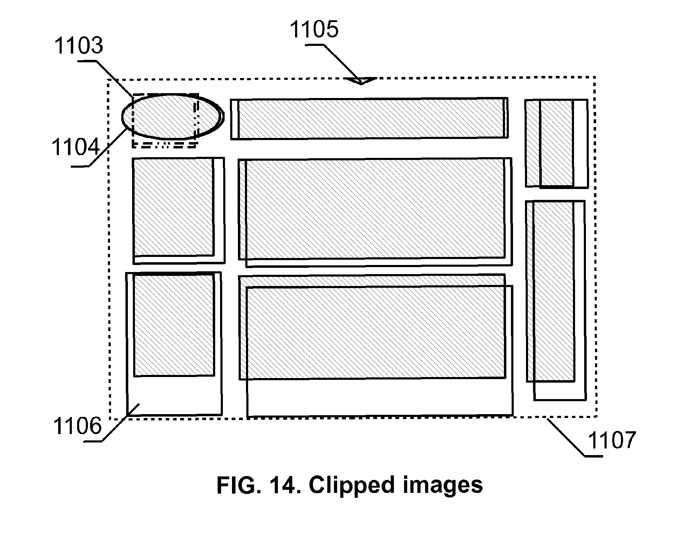

Figure 14 shows clipped images from Figure 13. New image boundary is denoted as 1107. Only a part of segment 1105 has remained. Margins were removed.

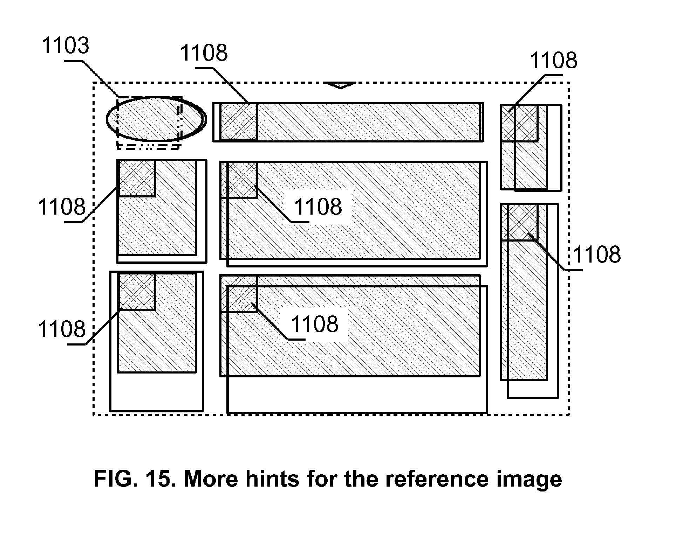

Figure 15 shows the case where more referece hints are used for alignment. In addition to the first hint 1103, hints 1108 are available for the reference image in this case. This allows more precise adjustment.

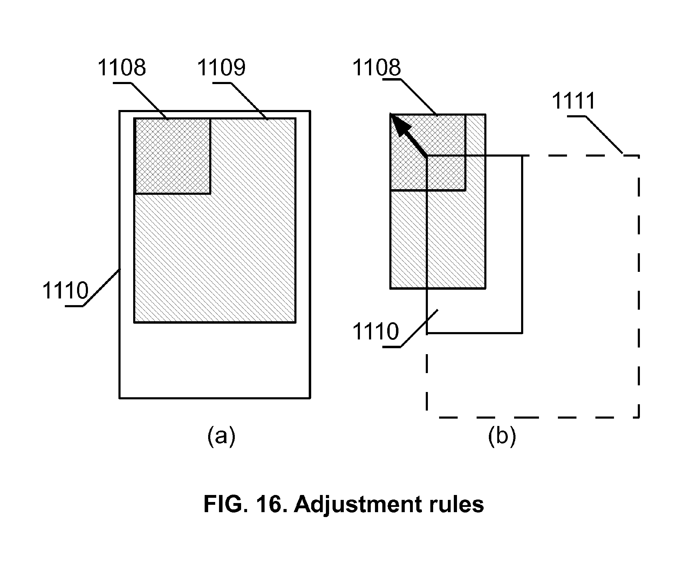

Figure 16 depicts the adjustment rules. The reference element 1109 is identified by the reference hint 1108. The test element is denoted as 1110. The adjustment is performed from right to left and bottom-up. In case (a) no adjustment is possible, as the test segment 1110 is shifted to the left of the reference hint 1108. In case (b) the adjustment is possible, as the test segment 1110 is shifted to the right of the reference hint 1108. A test hint corresponding to the reference hint 1108 is used to move the test segment 1110 together with the part 1111 of the test image, which part 1111 extends from the upper-left corner of the test element 1110 to the bottom-right corner of the whole test image.

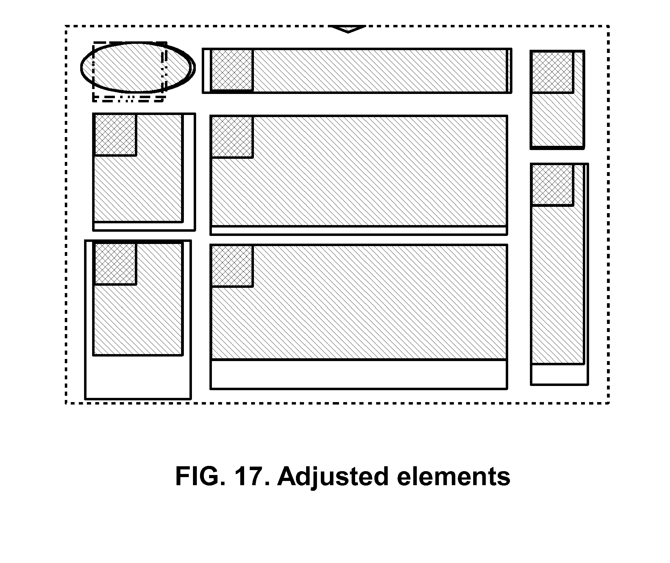

The result of the adjustment is depicted in Figure 17.

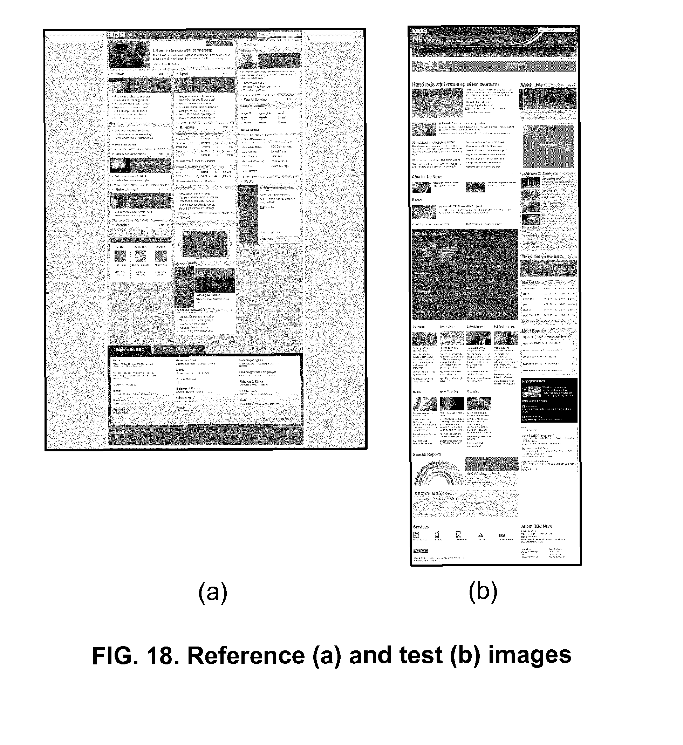

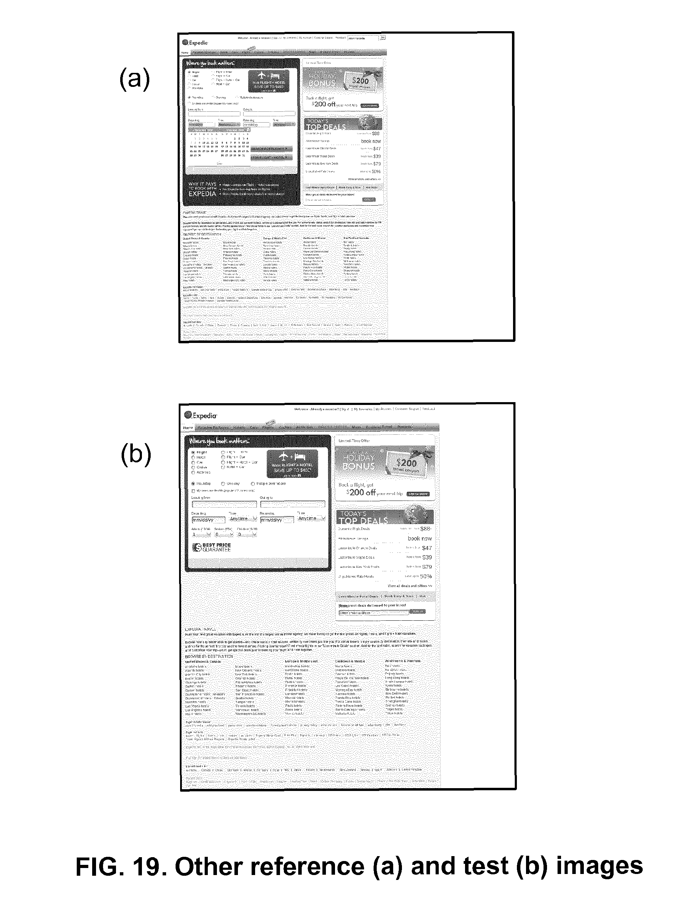

Figures 18 and 19 show exemplary reference and test images used for testing the rendering engine of a web browser.

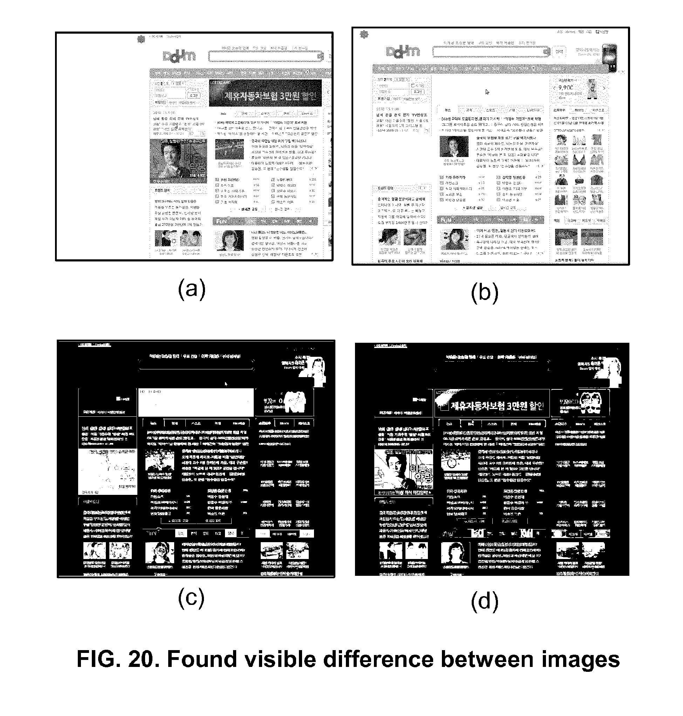

Figure 20 shows the found visible difference between images: the reference image (a) and the test image (b). Pixel-based visible difference is shown in (c) and VDP based visible difference is shown in (d). Images (c) and (d) were binarized for better clarity of the drawing - white regions mean the found visible difference.

Aforementioned embodiments of the present invention are non-limiting and non-excluding other applications of this invention.

## Claims

1. A method for testing the rendering quality, said method comprising the steps of:
getting the reference image together with one or more reference hints; and,
for one or more test images,
getting the test image; and
processing the test image in the image processing operation; and comparing the test image with the reference image in order to assess the visible similarity of said images;
**characterized in that**
the image processing operation comprises the method steps of:
computing one or more hints for the test image, said hints corresponding to one or more reference hints; and
basing on said hints, adjusting the test image to the reference image.

2. The method of Claim 1 wherein the image processing operation is further comprising the method steps of:
removing margins; and
detecting text regions; and
removing said text regions.

3. The method of Claim 1 wherein the reference image and one or more test images are results of internet document rendering.

4. The method of Claim 1 wherein one or more reference hints are specified manually.

5. The method of Claim 1 wherein one or more hints are found automatically basing on the variance of pixel colour.

6. The method of Claim 1, where the reference image is a graphical screen design and one or more test images are screen snapshots of the rendering results.

7. The method of Claim 1, where the avarage rendering quality is computed for a range of image pairs, each of said pairs comprising the reference and the test image.

8. An apparatus for testing the rendering quality (120), said apparatus comprising:
the input subsystem (100); the reference set storage (101) connected to the input subsystem (100) by means (116); the test set storage (102) connected to the input subsystem (100) by means (116); the reference data selector (103) connected to the reference storage (101) by means (111); the test image selector (104) connected to the test set storage (102) by means (112); the control unit (105) connected to the input subsystem (100) by means (108), said control unit controlling the reference data selector (103) and the test image selector (104) by means (115); the image comparison unit (106) connected to the reference data selector (103) by means (113) and connected to the test image selector (104) by means (114); the output subsystem (107) connected to the image comparison unit (106) by means (110) and connected to the control unit (105) by means (109);
**characterized in that**
the image comparison unit (106) is capable to compare images, wherein said image comparison comprises the method steps of:
getting the reference image together with one or more reference hints; and,
for one or more test images,
getting the test image; and
processing the test image in the image processing operation; and comparing the test image with the reference image in order to assess the visible similarity of said images;
wherein the image processing operation comprises the method steps of:
computing one or more hints for the test image, said hints corresponding to one or more reference hints; and
basing on said hints, adjusting the test image to the reference image.

9. An apparatus of Claim 8, said apparatus (120) connected to the test set selector (203) by means (210); said apparatus capable of computing the average visible difference for a range of image pairs belonging to the selected test set (202), each of said pairs comprising the reference and the test image; said apparatus (120) connected to the control unit (204); said control unit (204) capable of controlling the test selector (203) by means (211); said control unit capable of receiving the result from said apparatus (120) by means (212), and, by means (213), reporting only the result fulfilling predefined criteria together with an indentifier of the test set associated with said result.
